# EUROPEAN PATENT APPLICATION

(11) **EP 4 776 481 A1**
(43) Date of publication of application: **15.07.2026**
(21) Application number: 25226667.1
(22) Date of filing: 23.12.2025
(51) Int. Cl.: H02K 1/278, H02K 15/035, H02K 15/12

(54) **MOTOR ROTOR STRUCTURE**

(30) Priority: 10.01.2025 CN 202520064251 U
(71) Applicant: JL MAG Bonded Magnet Co., Ltd., Ganzhou City, Jiangxi Province 341001 (CN)
(72) Inventor: YOU, Zhenggang, 341001 GANZHOU CITY, JIANGXI PROVINCE (CN); Liu, Clair, 341001 GANZHOU CITY, JIANGXI PROVINCE (CN); CHEN, Dawei, 341001 GANZHOU CITY, JIANGXI PROVINCE (CN)
(74) Representative: RGTH

(57) **Abstract**

The application discloses a motor rotor structure. The motor rotor structure comprises a rotor portion (1) that comprises a rotor core (11) and a plurality of magnets (12), wherein the motor rotor structure comprises: two limit rings (2) at respective ends of the rotor portion (1); a plurality of limit bars (3), equal in number to the magnets (12), arranged alternately with the magnets (12), each limit bar (3) having both ends integrally connected with the corresponding limit rings (2); and limit faces (4), respectively provided at both end positions on an outside wall of each magnet (12) away from the rotor core (11), wherein limit slots (5) are formed between adjacent limit faces (4), and the limit bars (3) are fitted into the corresponding limit slots (5), such that the two limit rings (2) and the limit bars (3) jointly tighten the magnets (12) onto the rotor core.

## Description

### CROSS REFERENCE TO RELATED APPLICATIONS

This application claims priority to Chinese Patent Application No. 202520064251.X, titled "MOTOR ROTOR STRUCTURE", filed on January 10, 2025 with the China National Intellectual Property Administration, the entire contents of which are incorporated herein by reference.

### TECHNICAL FIELD

The present disclosure relates to the field of motor rotor technology, and more specifically, relates to a motor rotor structure.

### BACKGROUND

With the continuous advancement of enterprise automation, the requirements for industrial permanent magnet synchronous motors have become increasingly stringent. Currently, motor rotors are mainly divided into the two types as follows.

### I . IPM Rotor

Most existing DC Interior Permanent Magnet IPM rotor assemblies are composed simply of silicon steel sheets and magnet tiles. During the operation of an IPM brushless DC motor, this type of rotor assembly has relatively poor performance in suppressing magnetic leakage and skin effect within the rotor laminations. Meanwhile, the manufacturing process cannot ensure that the magnet tiles are vertically aligned in the slots, leading to multiple technical issues such as unstable dynamic equilibrium.

To improve motor power and efficiency, it is necessary to increase the effective magnetic area (i.e., main magnetic flux), thereby increasing the air-gap flux density and magnetic flux linkage to enhance motor power and efficiency. However, increasing the effective magnetic area also leads to significant leakage flux, intensifying the skin effect and causing excessive magnetic energy waste. Additionally, the volume of the magnet tiles increase, making the embedded process more difficult, which not only makes it hard to achieve maximum magnetic energy utilization and avoid the skin effect but also results in suboptimal motor efficiency and power performance due to improper vertical alignment of the magnet tiles.

Currently, in the industry, to suppress localized magnetic leakage and improve the embedded process of IPM brushless DC motors, a commonly adopted method is to reduce the dimensions of the connections near the shaft hole in the rotor lamination to their mechanical limit and to introduce transitional fillet designs, thus preventing excessive magnetic flux from concentrating toward the interior, i.e., the shaft hole direction, which could lead to magnetic leakage and the premature formation of a magnetic connection between the upper and lower fixed magnet tiles. However, this method not only increases the difficulty of manufacturing processes but also causes excessive stress concentration during high-speed operation of the motor. The resulting low yield strength can induce dynamic steady state instability and exacerbate issues such as torque ripple.

### II. SPM Rotor

Conventional Surface Permanent Magnet SPM rotors typically consist of a rotor core and a plurality of magnets forming a rotor portion. The magnets surround the rotor core and are adhesively fixed to it. Additionally, the entire outer circumference of the rotor portion is encapsulated with a cylindrical protective sleeve made of plastic, carbon fiber, or stainless steel to ensure long-term operational reliability without detachment of the magnets. Existing SPM rotors have the following issues:
1. due to the outer encapsulation protective sleeve of the rotor portion, the spacing between the SPM rotor and the stator is reduced; to ensure that the spacing between the rotor portion and the stator meets the requirements, the inner diameter of the stator needs to be increased; as a result, however, the spacing between the stator and the rotor portion increases, leading to a potential reduction in motor power;
2. due to the outer encapsulation protective sleeve of the rotor portion, it not only increases the rotor inertia, affecting the motor response speed, but also raises production costs and reduces production efficiency; additionally, it restricts airflow and impairs the rotor's ability to dissipate heat effectively.

### SUMMARY

In order to solve some or all of the aforementioned problems, the present disclosure aims to provide a motor rotor structure that solves motor power reduction issues, reduces rotor inertia, ensures motor response speed, lowers production costs, enhances production efficiency, and improves rotor heat dissipation.

The present disclosure provides a motor rotor structure comprising a rotor portion (1) that comprises a rotor core (11) and a plurality of magnets (12), wherein the motor rotor structure further comprises:
two limit rings (2), arranged at respective ends of the rotor portion (1);
a plurality of limit bars (3), equal in number to the magnets (12), arranged alternately with the magnets (12), each of the limit bars (3) having both ends integrally connected with the corresponding limit rings (2) respectively; and

limit faces (4), respectively provided at both end positions on an outside wall of each magnet (12) away from the rotor core (11), wherein limit slots (5) are formed between adjacent limit faces (4) respectively, and the plurality of limit bars (3) are respectively fitted into the corresponding limit slots (5), such that the two limit rings (2) and the plurality of limit bars (3) jointly tighten the plurality of magnets (12) onto the rotor core (11).

Optionally, the outside wall of each magnet (12) is chamfered at junctions with two side walls of the each magnet (12) to form two limit faces.

Optionally, the outside wall of each magnet (12) is chamfered at junctions with two side walls of the each magnet (12) to form two first inclined surfaces (43), and each first inclined surface (43) is chamfered at junctions with the outside wall of the magnet (12), the corresponding side wall and the corresponding end face to form two second inclined surfaces (44), wherein each limit face (4) is formed by one first inclined surface (43) and the corresponding two second inclined surfaces.

Optionally, a clearance gap (9) is formed between two adjacent magnets (12), and the clearance gap (9) is fitted with a limit plate (6), wherein one side of the limit plate (6) is connected to the rotor core (11), and the other side of the limit plate (6) is integrally formed with the corresponding limit bar.

Optionally, the width of each limit ring (2) is equal to a maximum width of the limit bar (3) along a radial direction of the rotor core.

Optionally, the width of each limit ring (2) is greater than a maximum width of the limit bar (3) along a radial direction of the rotor core (11), and the limit plate (6) is integrally formed with the limit ring.

Optionally, the limit rings (2), the limit bars (3) and the limit plates (6) are fixed to the rotor portion (1) by injection molding.

Optionally, the rotor core (11) comprises a supporting body (7) that is cylindrical or tubular in shape, and the magnets (12) are adhesively fixed to an outside wall of the supporting body.

Optionally, the rotor core (11) comprises a plurality of stacked supporting plates (8), adjacent supporting plates (8) are adhesively fixed together, each supporting plate (8) comprises a plurality of supporting discs (81) and a plurality of mounting plates (82), the plurality of supporting discs (81) are disk-shaped or annular in shape, the plurality of mounting plates (82) are evenly spaced around the supporting discs (81) and are integrally formed with the supporting discs (81), and the plurality of mounting plates (82) are arranged in a one-to-one correspondence with the plurality of magnets.

As can be seen from the above technical solutions, the motor rotor structure provided by the present disclosure offers the following advantages:
the motor rotor structure partially encapsulates the magnets, effectively preventing magnet from falling off; meanwhile, partial encapsulation reduces the space between the rotor portion and the stator, allowing adjustment of the magnetic field ripple to improve overall rotor performance and enhance motor stability; in addition, partial encapsulation reduces rotor inertia, ensuring motor response speed, lowering production costs, improving production efficiency. Moreover partial encapsulation can increase the exposed area of the magnets, thereby enhancing heat dissipation through the space between the rotor portion and stator.

Other features and advantages of the present disclosure will be described in the following description.

### BRIEF DESCRIPTION OF THE DRAWINGS

The drawings are provided to further understand the technical solution of the present disclosure and constitute part of the specification. Together with the embodiments, they are used to explain the technical solution of the present disclosure and do not limit the scope of the disclosure.
Figure 1 illustrates an overall structural schematic diagram of the motor rotor structure according to embodiment 1of the present application;
Figure 2 illustrates a front view of the motor rotor structure according to embodiment 1of the present application;
Figure 3 illustrates a structural schematic diagram of the rotor portion according to embodiment 1 of the present application;
Figure 4 illustrates a top view of the rotor portion according to embodiment 1of the present application;
Figure 5 illustrates a cross-sectional view of the rotor portion according to embodiment 1of the present application;
Figure 6 illustrates a structural schematic diagram of the magnet according to embodiment 1of the present application;
Figure 7 illustrates a top view of the magnet according to embodiment 1of the present application;
Figure 8 illustrates a structural schematic diagram of the limit ring, limit bar, and limit plate according to embodiment 1of the present application;
Figure 9 illustrates a structural schematic diagram of the limit ring, limit bar, and limit plate according to embodiment 1of the present application;
Figure 10 illustrates a structural schematic diagram of the rotor core according to embodiment 1of the present application;
Figure 11 illustrates a structural schematic diagram of the magnet according to embodiment 2 of the present application;
Figure 12 illustrates a front view of the limit bar according to embodiment 2 of the present application;
Figure 13 illustrates a front view of the rotor core according to embodiment 3 of the present application;
Figure 14 illustrates a top view of the rotor portion according to embodiment 3 of the present application;
Figure 15 illustrates a top view of the rotor core according to embodiment 3 of the present application.

### Reference Numerals:

1- rotor portion; 11- rotor core; 12- magnet; 2-limit ring; 3- limit bar; 4- limit face; 41-limit inclined surface; 42- limit arc surface; 43- first inclined surface; 44- second inclined surface; 5- limit slot; 6- limit plate; 7- supporting body; 8- supporting plate; 81- supporting disc; 82- mounting plate; 9 - clearance gap.

### DETAILED DESCRIPTION

To make the object, technical solutions, and advantages of the present utility model clearer and more readily understood, embodiments of the present disclosure will be described in detail below with reference to the accompanying drawings. It should be noted that, unless otherwise specified, the embodiments and features described in the embodiments of the present disclosure can be freely combined with one another where there is no conflict.

### Embodiment 1

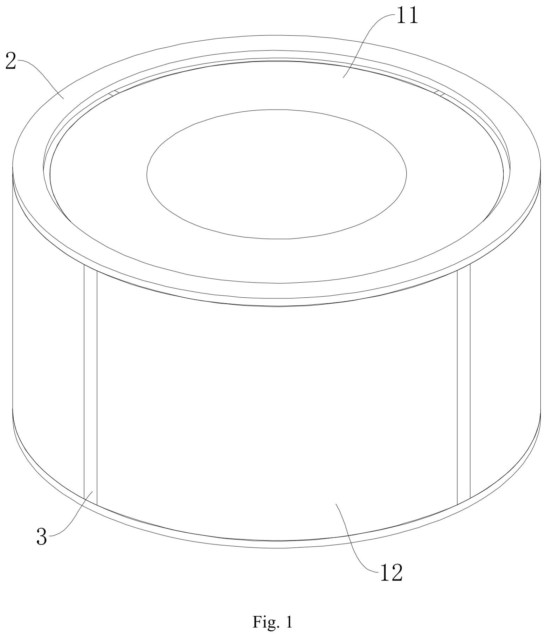

As shown in Figures 1-10, an embodiment of the present application is shown. The embodiment discloses a motor rotor structure comprising a rotor portion 1, and the rotor portion 1 comprises a rotor core 11 and a plurality of magnets 12. The cross-section of the magnet 12 is sector-shaped, a plurality of magnets 12 are evenly spaced around the periphery of the rotor core 11, and each magnet 12 is bonded and fixed to the rotor core 11. The number of magnets 12 can be four, eight, ten, twelve, etc., and the embodiment only illustrates the situation of four magnets.

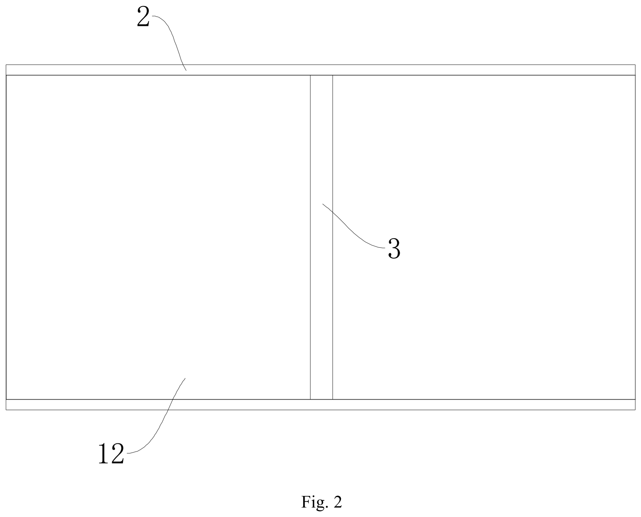

In the embodiment, as shown in Figures 1 and 2, annular limit rings 2 are disposed at both ends of the rotor portion 1 respectively, and a limit bar 3 is provided between adjacent magnets 12, that is, a plurality of magnets 12 and a plurality of limit bars 3 are arranged alternately. Further, both ends of each limit bar 3 are integrally formed and connected with the corresponding limit rings 2, respectively.

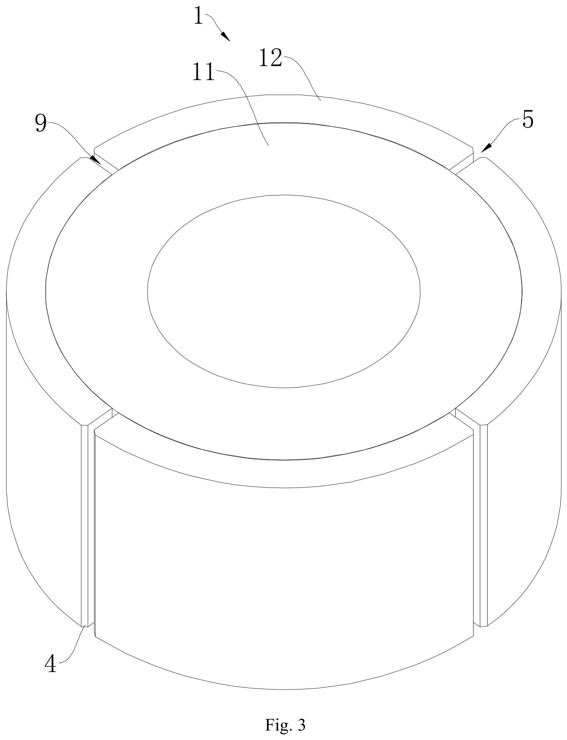

In the embodiment, as shown in Figures 3, 4 and 5, limit faces 4 are respectively provided at both end positions on the outside wall of each magnet 12 away from the rotor core 11. Limit slots 5 are formed between adjacent limit faces 4 respectively, and a plurality of limit bars 3 are respectively fitted into the corresponding limit slots 5, enabling the two limit rings 2 and a plurality of limit bars 3 to jointly tighten a plurality of magnets 12 onto the rotor core 11.

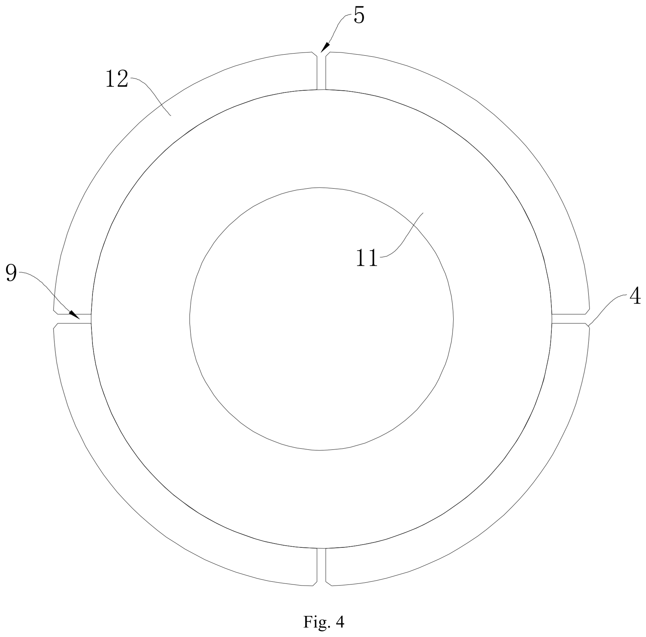

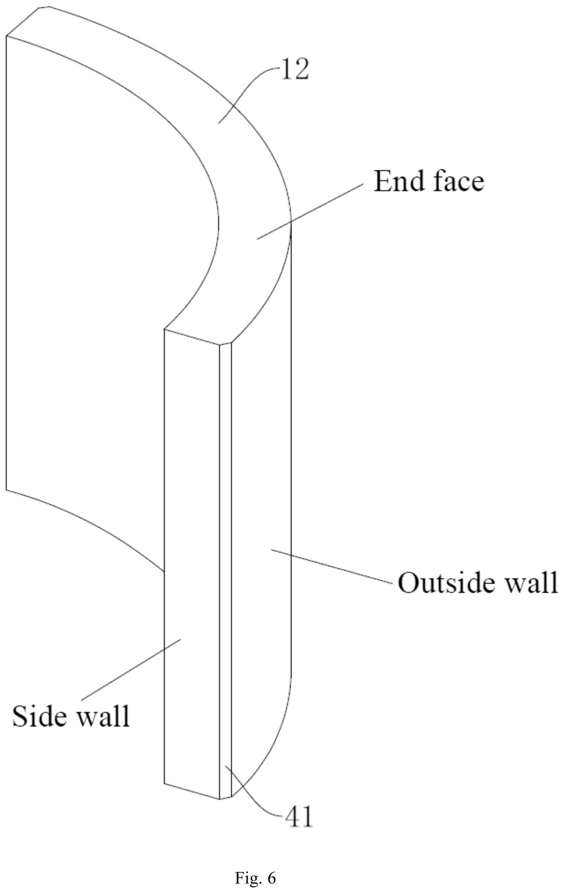

In the embodiment, as shown in Figures 4 and 6, the outside wall of each magnet 12 is chamfered at junctions with its two side walls to form two limit faces 4. Here, the "outside wall" of the magnet 12 refers to the arcuate surface on the side of the magnet 12 away from the rotor core 11, and the "side wall" of the magnet 12 refers to the surface of the magnet 12 that is adjacent and close to another magnet 12.

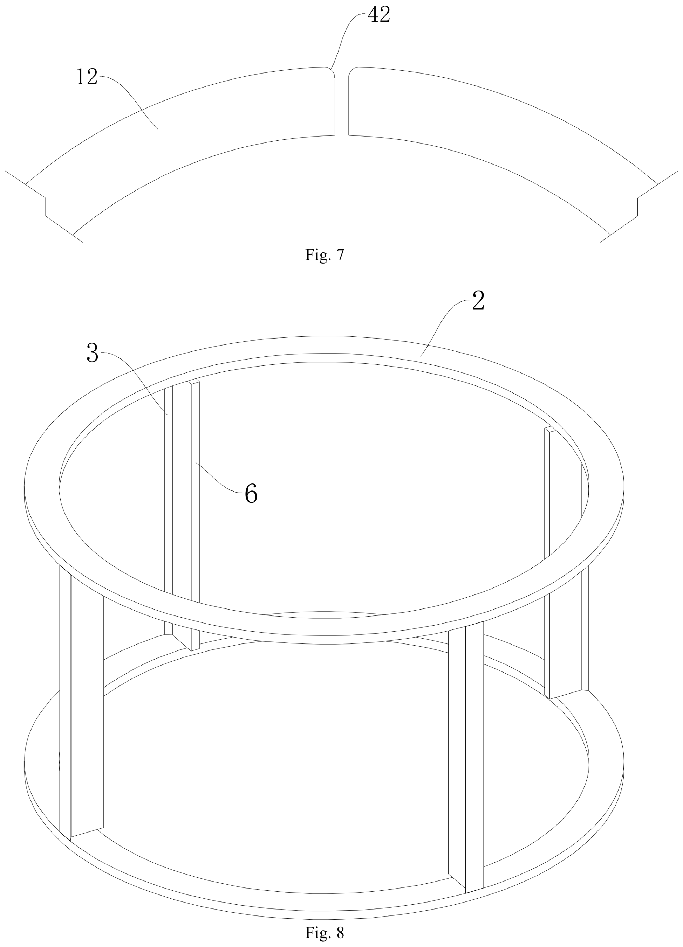

In the embodiment, as shown in Figure 6, the chamfer can be in the form of an angled surface, so as to create a limit inclined surface 41 at the ends of the magnet 12. Limit slots 5 are formed between any two limit inclined surfaces 41 respectively. In other embodiments, as shown in Figure 7, the chamfer can also be in the form of a rounded surface, so as to create limit arc surfaces 42 at the ends of the magnet 12. Limit slots 5 are formed between any two limit arc surfaces 42 respectively.

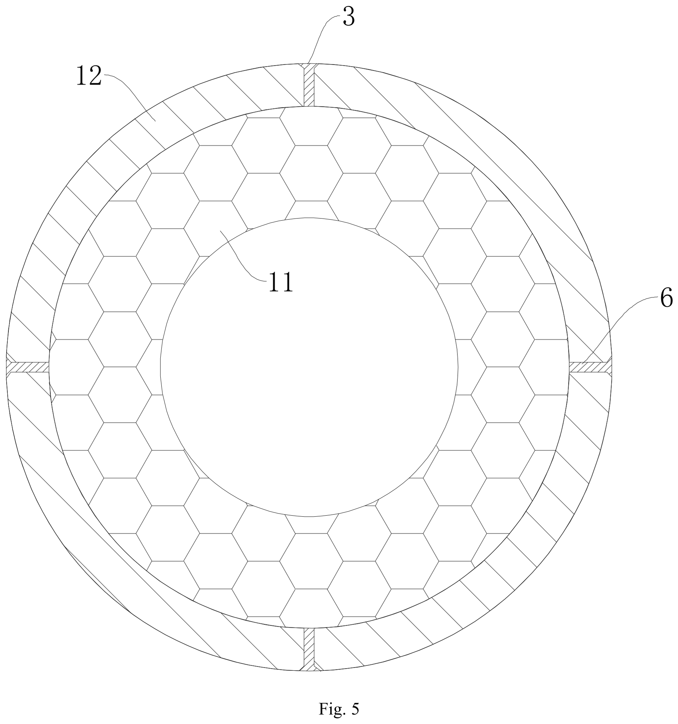

In the embodiment, as shown in Figure 5 and 8, there is a 1mm clearance gap 9 between adjacent magnets 12. Each clearance gap 9 is fitted with a limit plate 6. One side of the limit plate 6 is connected to the rotor core 11, and the other side is integrally formed with the corresponding limit bar 3.

In the embodiment, as shown in Figure 5, the rotor core 11 can be made of steel, aluminum alloy, any copper-based material, any iron-based material containing over 50% iron, organic materials, etc. The limit rings 2, limit bars 3, and limit plates 6 can be made of PA, PBT, PPA, PPS plastics containing glass fibers. Additionally, the limit rings 2, limit bars 3, and limit plates 6 are injection-molded and fixed onto the rotor portion 1.

The production process of the motor rotor structure in this embodiment is as follows.

A rotor core 11 with qualified dimensions is machined through a process flow including material withdrawal, CNC turning, grinding, cleaning, passivation, and full inspection. The ends of the magnet 12 are chamfered or precision-ground to form limit faces 4 of the same size at both ends of the magnet 12. In this embodiment, the chamfering angle ranges from 0.1° to 170°, and by adjusting this angle, magnetic fields with different magnetic field ripples can be obtained, such as sinusoidal waves or saddle-shaped waves. In this embodiment, the chamfering angle is set to 120°.

Next, the magnets 12 are adhesively bonded to the rotor core 11 to form a bonded assembly, ensuring a 1 mm clearance gap 9 between adjacent magnets 12. Then, the bonded assembly are baked and cured, and the outer diameter of the bonded assembly is precision-ground, thereby the fabrication of the rotor 1 is completed.

Subsequently, the rotor portion 1 is placed into an injection mold for plastic injection molding. The plastic fills the limit slot 5 to form the limit bar 3, enters the clearance gap between any two adjacent magnets 12 to form the limit plate 6, and forms the limit rings 2 at both ends of the rotor portion 1. In this way, the limit rings 2, limit bars 3, and limit plates 6 are used to partially encapsulate the magnets 12, thereby achieving effective fixation of the magnets 12 to the rotor core 11.

In the motor rotor structure in this embodiment, the magnets 12 are partially encapsulated by the limit rings 2, the limit bars 3 and the limit plates 6. The two limit rings 2 apply restraining force to the magnets 12 in the axial direction of the rotor core 11, thereby achieving axial position limit of the magnets 12 in the axial direction of the rotor core 11. The limit bars 3 apply restraining component force in the radial direction of the rotor core 11, thereby achieving radial position limit of the magnets 12 in the radial direction of the rotor core 11. Therefore, the two limit rings 2 and the plurality of limit bars 3 cooperatively secure the plurality of magnets 12 onto the rotor core 11, thus ensuring effective fixation of the magnets 12 to prevent them from falling off. In addition, the limit plates 6 are injection-molded into the clearance gaps 9 between any two adjacent magnets 12, providing further fixation of adjacent magnets 12 and enhancing the connection stability between the magnets 12 and the rotor core 11.

Meanwhile, the motor rotor structure partially encapsulates the magnets 12, which allows for a smaller space between the rotor portion 1 and the stator, helps maintain motor power output and improves the overall performance of the rotor. In addition, the partial encapsulation can reduce rotor inertia, ensuring faster motor response, while lowering production costs and improving production efficiency. Moreover, the partial encapsulation can increase the exposed area of the magnets 12, allowing heat to dissipate through the space between the rotor portion 1 and the stator, thereby effectively enhancing the heat dissipation performance of the rotor.

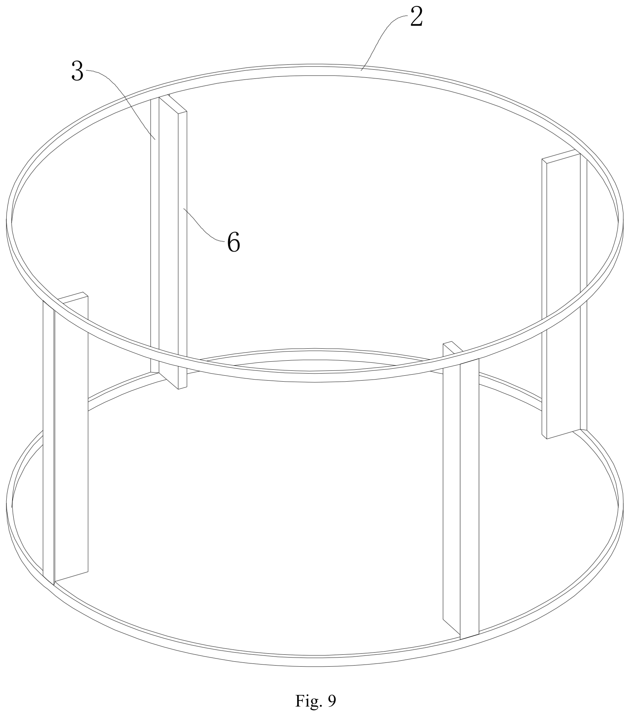

In the embodiment, as shown in Figures 8 and 9, the width of the limit ring 2 is greater than the maximum width of the limit bar 3 along the radial direction of the rotor core 11, and the limit plate 6 is integrally formed with the limit ring 2. Optionally, the width of the limit ring 2 can be equal to the maximum width of the limit bar 3 along the radial direction of the rotor core 11, to increase the exposed area of the magnet 12 and enhance the heat dissipation performance of the rotor.

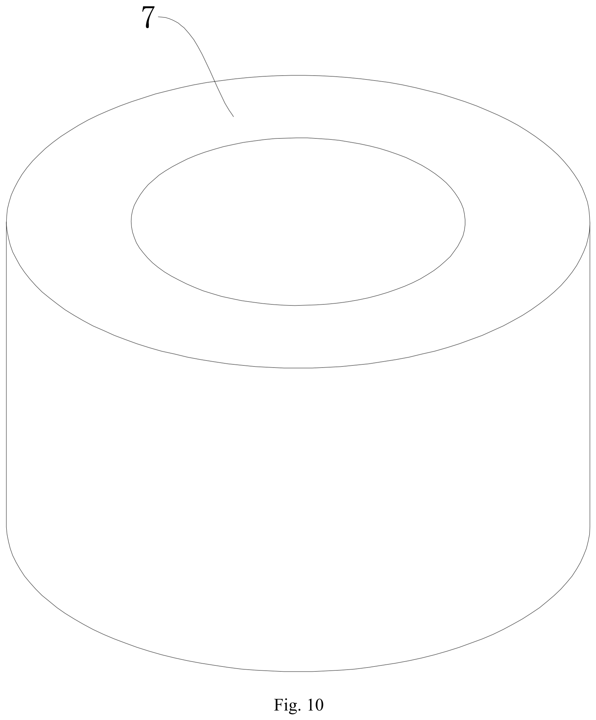

In the embodiment, as shown in Figures 4 and 10, the rotor core 11 comprises a supporting body 7, which is cylindrical or tubular in shape. The magnets 12 adhesively fixed to the lateral surface of the supporting body 7. A cylindrical or tubular supporting body 7 and annular rotor core 11 has high concentricity, making it easier to fix the magnets 12 onto the rotor core 11, thereby improving production efficiency. In this embodiment, the supporting body 7 is preferably a tubular structure.

As described above, compared to the SPM rotor structures in the prior art, the motor rotor structure in this embodiment has better roundness of the outer diameter and concentricity between inner and outer diameters, has improved dynamic balance, and prevents the magnets 12 from falling off through partial encapsulation of the magnets 12. Additionally, the motor rotor structure in this embodiment reduces the space between the rotor portion 1 and the stator, and adjusts the magnetic field ripple, thereby enhancing the overall performance of the rotor and further improving product stability.

### Embodiment 2

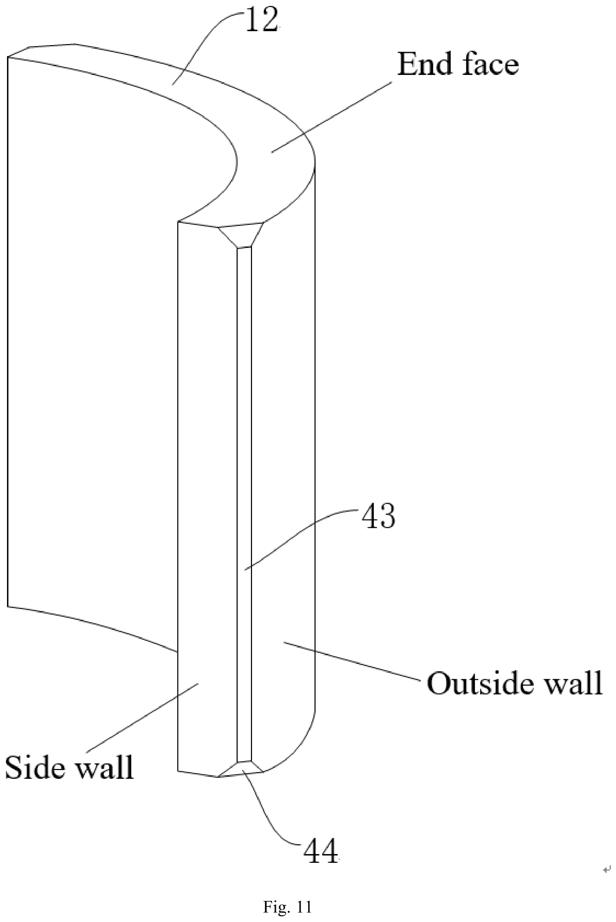

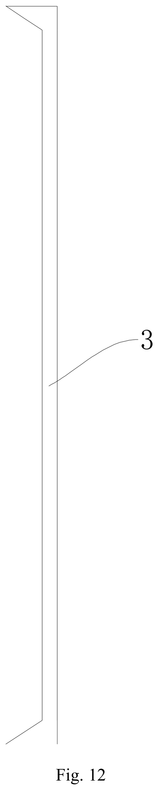

Figures 11 and 12 show embodiment 2 of the present disclosure. The difference between this embodiment and embodiment 1 lies in: the outside wall of each magnet 12 is chamfered at junctions with its two side walls to form two first inclined surfaces 43, and each first inclined surface 43 is further chamfered at junctions with the outside wall of the magnet 12, the corresponding side wall, and the corresponding end face to form two second inclined surfaces 44. The limit face 4 is formed by one first inclined surface 43 and the corresponding two second inclined surfaces 44.

It should be noted that: the 'outside wall' of the magnet 12 refers to the arcuate surface on the side of the magnet 12 away from the rotor core 11, the 'side wall' of the magnet 12 refers to the surface of the magnet 12 that is adjacent and close to another magnet 12, and the 'end face' of the magnet 12 refers to the two parallel surfaces of the magnet 12.

In the embodiment, as shown in Figures 11 and 12, since the first inclined surface 43 and the two second inclined surface 44 together form the limit face 4, after the limit bar 3 is injection-molded and filled into the limit slots 5, limit protrusions are formed at the two ends of the limit bar 3 respectively. The limit protrusions can apply limit force to the magnet 12 in both the axial and radial directions of the rotor core 11, thereby providing improved position limit of the magnet 12 and ensuring the connection stability between the magnet 12 and the rotor core 11.

### Embodiment 3

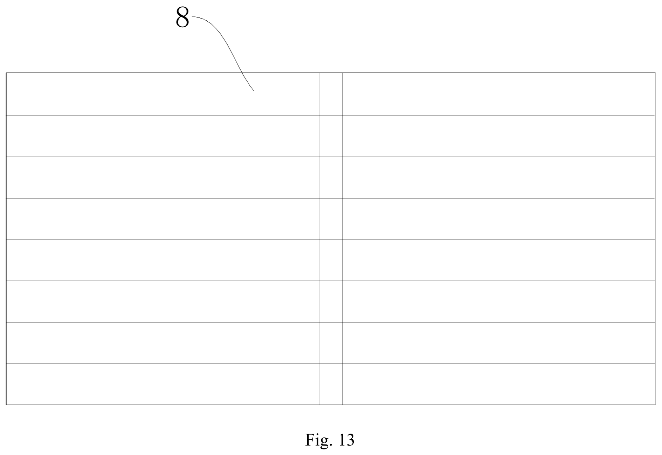

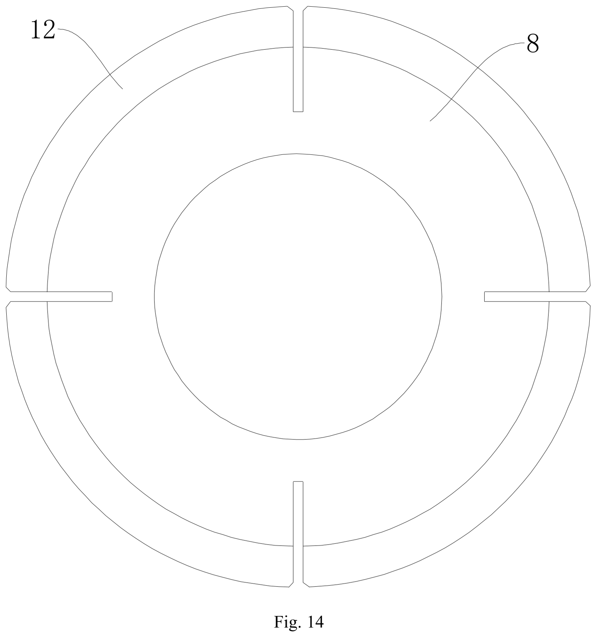

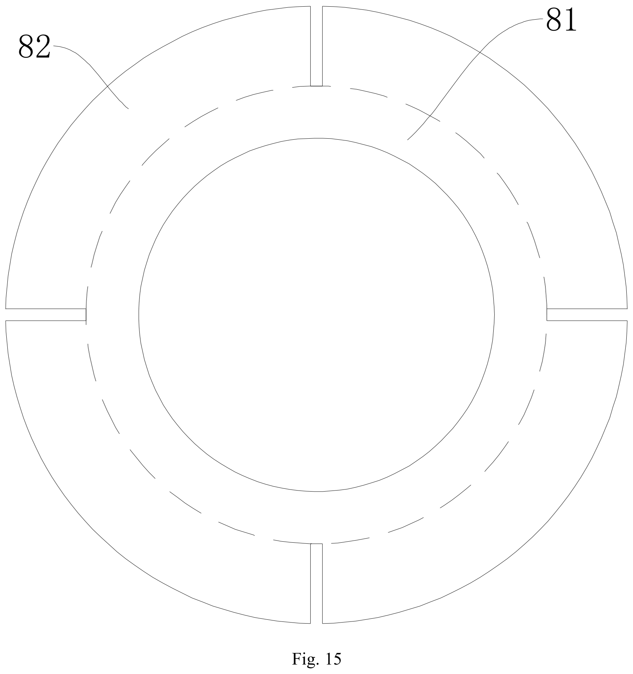

Figures 13, 14, and 15 illustrate embodiment 3 of the present disclosure. The difference between this embodiment and embodiment 1 lies in that: the rotor core 11 comprises a plurality of stacked supporting plates 8, and any adjacent supporting plates 8 being adhesively fixed together. In this embodiment, the supporting plate 8 is preferably made of silicon steel sheet. In other embodiments, however, it can also be made of other materials.

In the embodiment, as shown in Figures 13, 14, and 15, each supporting plate 8 comprises a supporting disc 81 and a plurality of mounting plates 82. The supporting disc 81 is disk-shaped or annular in shape. The plurality of mounting plates 82 are evenly spaced around the supporting disc 81 and are integrally formed with the supporting disc 81. The distance between two adjacent mounting plates 82 is 1mm, and the plurality of mounting plates 82 are arranged in a one-to-one correspondence with the plurality of magnets 12, that is, the magnet 12 is adhesively bonded to the corresponding row of mounting plates 82.

It should be noted that, unless otherwise specified, the technical terms or scientific terms used in this disclosure shall be understood in their commonly accepted meanings by those skilled in the art to which this disclosure belongs.

Furthermore, the terms "first", "second" and the like are used solely for descriptive purposes and should not be interpreted as indicating or implying relative importance, nor should they be taken as an indication of the number of technical features involved. In the context of this disclosure, the term "plurality" means two or more, unless otherwise clearly and specifically defined.

Finally, it should be emphasized: the above embodiments are merely illustrative of the technical solutions of the present disclosure, and not intended to limit the same. Although the present disclosure has been described in detail with reference to the foregoing embodiments, it will be appreciated by those skilled in the art that modifications may still be made to the technical solutions described in the foregoing embodiments, or some or all of the technical features may be equivalently substituted. Such modifications or substitutions do not cause the essence of the technical solutions to depart from the scope of the technical solutions of the respective embodiments of the present utility model, and they should all be included within the scope of the claims and specification of this utility model. In particular, as long as there is no structural conflict, the various technical features mentioned in the individual embodiments can be combined in any manner. The present disclosure is not limited to the specific embodiments disclosed in the text, but includes all technical solutions falling within the scope of the appended claims.

## Claims

1. A motor rotor structure, comprising a rotor portion (1) that comprises a rotor core (11) and a plurality of magnets (12), wherein the motor rotor structure further comprises:
two limit rings (2), arranged at respective ends of the rotor portion (1);
a plurality of limit bars (3), equal in number to the magnets (12), arranged alternately with the magnets (12), each of the limit bars (3) having both ends integrally connected with the corresponding limit rings (2) respectively; and
limit faces (4), respectively provided at both end positions on an outside wall of each magnet (12) away from the rotor core (11), wherein limit slots (5) are formed between adjacent limit faces (4) respectively, and the plurality of limit bars (3) are respectively fitted into the corresponding limit slots (5), such that the two limit rings (2) and the plurality of limit bars (3) jointly tighten the plurality of magnets (12) onto the rotor core (11).

2. The motor rotor structure according to claim 1, wherein the outside wall of each magnet (12) is chamfered at junctions with two side walls of the each magnet (12) to form two limit faces (4).

3. The motor rotor structure according to claim 1, wherein the outside wall of each magnet (12) is chamfered at junctions with two side walls of the each magnet (12) to form two first inclined surfaces (43), and each first inclined surface (43) is chamfered at junctions with the outside wall of the magnet (12), the corresponding side wall and the corresponding end face to form two second inclined surfaces (44), wherein each limit face (4) is formed by one first inclined surface (43) and the corresponding two second inclined surfaces (44).

4. The motor rotor structure according to claim 2 or 3, wherein a clearance gap (9) is formed between two adjacent magnets (12), and the clearance gap (9) is fitted with a limit plate (6), wherein one side of the limit plate (6) is connected to the rotor core (11), and the other side of the limit plate (6) is integrally formed with the corresponding limit bar (3).

5. The motor rotor structure according to claim 4, wherein the width of each limit ring (2) is equal to a maximum width of the limit bar (3) along a radial direction of the rotor core (11).

6. The motor rotor structure according to claim 4, wherein the width of each limit ring (2) is greater than a maximum width of the limit bar (3) along a radial direction of the rotor core (11), and the limit plate (6) is integrally formed with the limit ring (2).

7. The motor rotor structure according to claims 5 or 6, wherein the limit rings (2), the limit bars (3), and the limit plates (6) are fixed to the rotor portion (1) by injection molding.

8. The motor rotor structure according to one of the preceding claims, wherein the rotor core (11) comprises a supporting body (7) that is cylindrical or tubular in shape, and the magnets (12) are adhesively fixed to an outside wall of the supporting body (7).

9. The motor rotor structure according to one of the preceding claims, wherein the rotor core (11) comprises a plurality of stacked supporting plates (8), adjacent supporting plates (8) are adhesively fixed together, each supporting plate (8) comprises a plurality of supporting discs (81) and a plurality of mounting plates (82), the plurality of supporting discs (81) are disk-shaped or annular in shape, the plurality of mounting plates (82) are evenly spaced around the supporting discs (81) and are integrally formed with the supporting discs (81), and the plurality of mounting plates (82) are arranged in a one-to-one correspondence with the plurality of magnets (12) .
